# EUROPÄISCHE PATENTSCHRIFT

(11) **EP 2 882 806 B1**
(45) Veröffentlichungstag und Bekanntmachung des Hinweises auf die Patenterteilung: **31.05.2017**
(21) Anmeldenummer: 13745120.9
(22) Anmeldetag: 06.08.2013
(51) Int. Cl.: C08L 25/12, C08L 51/04

(54) **POLYMERMISCHUNGEN MIT OPTIMIERTEM ZÄHIGKEITS-/STEIFIGKEITS-VERHÄLTNIS UND OPTISCHEN EIGENSCHAFTEN**
POLYMER MIXTURES WITH OPTIMIZED TOUGHNESS/STIFFNESS RATIO AND OPTICAL PROPERTIES
MÉLANGES DE POLYMÈRES PRÉSENTANT UN RAPPORT TÉNACITÉ/RIGIDITÉ OPTIMISÉ ET DES PROPRIÉTÉS OPTIQUES

(30) Priorität: 08.08.2012 EP 12179673
(43) Veröffentlichungstag der Anmeldung: 17.06.2015
(73) Patentinhaber: INEOS Styrolution Europe GmbH, 60325 Frankfurt am Main (DE)
(72) Erfinder: NIESSNER, Norbert, 67159 Friedelsheim (DE); ISHAQUE, Michael, Discovery Bay-Lantau Island (HK); BÖCKMANN, Philipp, 67098 Bad Dürkheim (DE); MINKWITZ, Rolf, 68167 Mannheim (DE)
(74) Vertreter: Jacobi, Markus Alexander
(86) Internationale Anmeldenummer: PCT/EP2013/066440
(87) Internationale Veröffentlichungsnummer: WO 2014/023714

(56) Entgegenhaltungen:
- US-A1- 2002 028 878

## Beschreibung

Die Erfindung betrifft eine Polymermischung aus Styrol/Nitril-Monomer-Copolymeren und Pfropf-Copolymeren auf Basis von Acrylat-Kautschuken, sowie daraus hergestellte thermoplastische Formmassen und Formteile und deren Verwendung.

Um zu schlagzähen, thermoplastischen Massen zu gelangen, gibt man oftmals Pfropfkautschuke zu den bei Raumtemperatur spröden, die Matrix bildenden Polymeren. Die Herstellung solcher Schlagzähmodifizierer ist seit langem bekannt und beispielsweise in DE-A 1260135, DE-A 2311129 und DE-A 2826925 beschrieben. Besteht die Matrix aus Polystyrol oder Styrolcopolymeren, so lässt sich beobachten, dass die Wirksamkeit der Pfropfcopolymere bezüglich ihrer schlagzähmodifizierenden Wirkung mit zunehmender Größe der Pfropfcopolymere zunimmt. Bei Einsatz von kleinteiligen Pfropfkautschuken besteht gleichzeitig das Problem, dass die Zähigkeit der schlagzähmodifizierenden Massen stark von der Verarbeitungstemperatur abhängt.

Polymere Massen mit verbesserter Schlagzähigkeit bei gleichbleibend guter Einfärbbarkeit können durch Zumischen einer großteiligen zu einer kleinteiligen Kautschukkomponente (bimodale Kautschukteilchen) erhalten werden, wie in DE-A 2826925 beschrieben. Oftmals reicht die dort erzielte Schlagzähigkeit, insbesondere die Tieftemperaturschlagzähigkeit, der Massen für hohe Beanspruchung nicht aus. Zudem kann die Schlagzähigkeit nicht durch beliebige Zugabe der großteiligen Kautschukmenge erhöht werden, da sonst die Einfärbbarkeit deutlich verschlechtert wird.

Es ist bekannt, dass die Eigenschaften der Acrylester-Weichphase verbessert werden können, wenn die polymere Weichphase mindestens einen Vernetzer enthält. So beschreibt US 4,876,313 sogenannte "core-shell" Polymere erhältlich via Emulsionspolymerisation, enthaltend unterschiedliche Vernetzer. Als "core-monomer" werden bevorzugt Alkyl(meth)acrylate oder Styrol und als "shell-monomer" wird bevorzugt Methylmethacrylat und Methacrylsäure eingesetzt. Unter den bevorzugten Vernetzern ist Allyl(meth)acrylat in einer Menge von 1-10 Gew.-% in Bezug auf das "core-monomer". Die core-shell Polymere können mit anderen mehrstufigen Acrylemulsionen gemischt werden.

Es ist bekannt, dass schlagzähe, mehrphasige Emulsionspolymerisate vom ASA ("Acrylnitril-Styrol-Acrylester") -Typ ein besonders ausgewogenes Eigenschaftsprofil haben, wenn die Acrylester-Weichphase mindestens einen Vernetzer enthält.

US 2002/028878 A1 beschreibt Polymermischungen enthaltend SAN-Copolymere und ASA-Pfropfcopolymere, welche auf einer vernetzten Pfropfgrundlage eines Copolymers aus Alkylacrylat, insbesondere Butylacrylat BA, Methylmethacrylat (MMA) und Acrylnitril (AN) basieren. Bei der Herstellung der Pfropfgrundlage wird als Vernetzer Ethylenglykoldimethacrylat allein oder in Kombination mit Allylmethacrylat (AMA) eingesetzt.

EP-A 0535456 beschreibt eine thermoplastische Formmasse mit verbesserter Schlagzähigkeit enthaltend ein Styrol/Acrylnitril-Copolymer und ein mehrschaliges Pfropfcopolymer, wovon der Kern und die erste Pfropfhülle mit 0,1 bis 10 Gew.-%, vorzugsweise 1 bis 4 Gew.-%, eines Vernetzers, insbesondere Dicyclopentadienylacrylat, vernetzt sind. Es werden beispielhaft Pfropfcopolymere beschrieben, bei welchen der vernetzte Kern aus Polystyrol, die erste vernetzte Hülle aus Butylacrylat, die zweite Hülle aus Styrol und die dritte Hülle aus Styrol und Acrylnitril ist.

In DE-A 4006643 wird eine thermoplastische Formmasse aus einem Styrol/Acrylnitril-Copolymer oder einem α-Methylstyrol-Acrylnitril-Copolymer und einem teilchenförmigen Pfropfcopolymer beschrieben. Die Pfropfgrundlage ist ein vernetzter Acrylatkautschuk mit einer Partikelgröße von 30 bis 1000 nm. Als Vernetzer werden mehrere polyethylenisch ungesättigte Monomeren aufgeführt, u.a. auch Allylmethacrylat. Bevorzugter und ausschließlich eingesetzter Vernetzer ist der Acrylsäureester des Tricyclodecenylalkohols (DCPA). Die Menge des Vernetzers beträgt 0,1 bis 5 Gew.-%, vorzugsweise 1 bis 4 Gew.-%. Die Pfropfhülle ist bevorzugt aus 45 bis 80 Gew.-% Styrol oder α-Methylstyrol und 10 bis 30 Gew.-% Acrylnitril.

Der genannte Stand der Technik zeigt, dass die Vernetzer in unterschiedlichen Mengen enthalten sein können. Die Übertragung der im Stand der Technik genannten Vernetzer-Mengen auf ASA-Formmassen mit deutlich unterschiedlichen Teilchengrößen gelingt oftmals nur mit deutlichen Abstrichen bei der Schlagzähigkeit. Unklar ist, wie die optimalen Vernetzer-Mengen schlagzäh modifizierter ASA Formmassen mit deren Teilchengröße zusammenhängen.

Die DE-A 2826925 beschreibt eine witterungsbeständige, schlagzähe thermoplastische Masse mit guter Einfärbbarkeit, bestehend aus einem Pfropfmischpolymer und einer Hartkomponente aus Styrol/Acrylnitrilcopolymeren.

Das Pfropfmischpolymer setzt sich aus zwei getrennt hergestellten Pfropfcopolymeren zusammen, die jeweils aus einer vernetzten Acrylester-Pfropfgrundlage und einer Hülle aus Acrylnitril/Styrol-Copolymeren bestehen, wobei die Teilchengröße der Pfropfgrundlage des ersten Pfropfcopolymeren 50 bis 150 nm und die des zweiten Pfropfcopolymeren 200 bis 500 nm beträgt. Bevorzugter und ausschließlich eingesetzter Vernetzer der jeweiligen Pfropfgrundlage ist der Acrylsäureester des Tricyclodecenylalkohols. Die Menge des Vernetzers beträgt 0,5 bis 10 Gew.-%, vorzugsweise 1 bis 5 Gew.-%.

In DE-A 4131729 wird eine thermoplastische Formmasse mit verbesserter Kältezähigkeit aus einem Styrol/Acrylnitril-Copolymer oder einem α-Methylstyrol-Acrylnitril-Copolymer und einer Mischung von teilchenförmigen Pfropfcopolymeren A und B mit einer Partikelgröße von 50 bis 200 nm und 200 bis 1000 nm beschrieben. Die Pfropfgrundlagen A1 und B1 sind verschiedene vernetzte Acrylatkautschuke. Als Vernetzer werden mehrere polyethylenisch ungesättigte Monomeren aufgeführt. Bevorzugter und ausschließlich eingesetzter Vernetzer ist der Acrylsäureester des Tricyclodecenylalkohols (DCPA). Die Menge des Vernetzers beträgt 0,1 bis 5 Gew.-%, vorzugsweise 0,2 bis 4 Gew.-%, beispielhaft 2 Gew.-%. Die Pfropfhülle ist bevorzugt aus 45 bis 80 Gew.-% Styrol oder α-Methylstyrol und 10 bis 30 Gew.-% Acrylnitril.

In EP-A 1 893 659 werden ebenfalls Formmassen auf Basis von ASA-Harzen mit einer elastomeren Phase und einer thermoplastischen Phase beschrieben. Bei der elastomeren Phase handelt es sich um ein Kautschuksubstrat basierend auf einem Alkyl(meth)acrylat-Monomer und mindestens einem Vernetzer. Als Vernetzer wird eine Vielzahl von polyethylenisch ungesättigten Monomeren aufgeführt. Bevorzugter und ausschließlich eingesetzter Vernetzer ist Triallylcyanurat. Ein Teil der thermoplastischen Hartphase, welche vorzugsweise ein Styrol/Acrylnitril-Copolymer oder ein Styrol/Acrylnitril/Methylmethacrylat-Copolymer enthält, ist auf die elastomere Kautschukphase aufgepfropft. Die elastomere Phase kann zwei oder mehr Kautschuksubstrate mit verschiedenen Teilchengrößen im Bereich von 50 bis 1000 nm (ungepfropft gemessen), insbesondere im Bereich von 80 bis 500 nm, enthalten. Gemäß einer Ausführungsform wird das feinteiligere Kautschuksubstrat im Überschuss eingesetzt.

Die vorgenannten Formmassen weisen verbesserten Glanz und verringerte Trübung auf, jedoch sind die mechanischen Eigenschaften, insbesondere bei tiefen Temperauren, weiterhin verbesserungsbedürftig. Eine Aufgabe der vorliegenden Erfindung ist es, thermoplastische Massen zur Verfügung zu stellen, die vor allem bei tiefen Temperaturen unter 0°C, bevorzugt unabhängig von der Verarbeitungstemperatur, bessere Schlagzähigkeit, Spannungsriss-Korrosion und insbesondere bessere multiaxiale Zähigkeiten aufweisen. Darüber hinaus sollte sich der Glanz der Formmasse verbessern oder zumindest gleichbleibend sein.

Die Aufgabe wird durch die erfindungsgemäßen Polymermischungen gelöst.

Ein Gegenstand der Erfindung sind Polymermischungen aus den folgenden Polymerkomponenten A1 und A2 und/oder A3. Gegenstand sind somit Polymermischungen aus den Polymerkomponenten A1 und A2, Polymermischungen aus den Polymerkomponenten A1 und A3 sowie Polymermischungen aus den Polymerkomponenten A1 und A2 und A3, wobei insbesondere folgende Mengenbereiche in Frage kommen:
A1: 5 bis 95 Gew.-% eines Copolymeren A1 aus:
   A11: 60 bis 80 Gew.-% mindestens eines Styrols oder Styrolderivats A11,
   A12: 40 bis 20 Gew.-% mindestens eines eine Nitrilgruppe enthaltenden ethylenisch ungesättigten Monomeren A12,
   A13: 0 bis 20 Gew. % mindestens eines weiteren, copolymerisierbaren Monomeren A13;
A2: 5 bis 50 Gew.-% eines Pfropfcopolymeren A2 mit einer mittleren Teilchengröße von 90 bis 280 nm, aus:
   A21: 60 bis 80 Gew.-% mindestens einer kautschukartigen Pfropfgrundlage A21 mit einer Tg < 0 °C aus
      A211: 70 bis 99.9 Gew.-% mindestens eines Alkylacrylats A211,
      A212: 0.1 bis 0.6 Gew.-% mindestens eines Allylmethacrylats A212,
      A214: 0 bis 29.9 Gew.-% mindestens eines weiteren der folgenden copolymerisierbaren Monomeren A214: Methylmethacrylat, Ethylmethacrylat, Phenylmaleinimid, Acrylamid, Vinylmethylether,
   A22: 20 bis 40 Gew.-% mindestens einer Pfropfhülle aus:
      A221: 65 bis 70 Gew.-% mindestens eines vinylaromatischen Monomeren A221,
      A222: 30 bis 35 Gew.-% mindestens eines polaren, copolymerisierbaren ungesättigten Monomeren A222; und/oder
A3: 5-50 Gew.-% eines Pfropfcopolymeren A3 mit einer Teilchengröße zwischen 300 und 600 nm, aus:
   A31: 60 bis 80 Gew.-% mindestens einer kautschukartigen Pfropfgrundlage A31 mit einer Tg < 0 °C aus
      A311: 70 bis 99.9 Gew.% mindestens eines Alkylacrylats A311,
      A312: 0.1 bis 0.4 Gew.-% mindestens eines Allylmethacrylats A312
      A314: 0 bis 29.9 Gew.-% mindestens eines weiteren der folgenden copolymerisierbaren Monomeren A314: Methylmethacrylat, Ethylmethacrylat, Phenylmaleinimid, Acrylamid, Vinylmethylether,
   A32: 20 bis 40 Gew.-% mindestens einer Pfropfhülle aus:
      A321: 65 bis 70 Gew.-% mindestens eines vinylaromatischen Monomeren A321,
      A322: 30 bis 35 Gew.-% mindestens eines polaren, copolymerisierbaren ungesättigten Monomeren A322.

Das Gewichtsverhältnis von Komponente A2 zu Komponente A3 beträgt oftmals von 3:1 bis 1:1. Die Gewichtsanteile der Polymerkomponenten A1, A2 und/oder A3 sollen sich zu 100 Gew.-% ergänzen.

Die jeweiligen Gewichtsverhältnisse betragen bei den Polymermischungen oftmals z. B. :
a) von A1 und A2 von 65:35 bis 75:25, oftmals 70:30,
b) von A1 und A3 von 65:35 bis 75:25, oftmals 70:30, sowie
c) von A1, A2 und A3 von etwa 70:20:10.

Unter (Meth)acrylat-Monomeren sind sowohl Methacrylat- als auch Acrylat-Monomere zu verstehen.

Die erfindungsgemäßen Polymermischungen können zusätzlich zu den Polymerkomponenten A1, A2 und/oder A3 auch Hilfs- und/oder Zusatzstoffe enthalten. Bevorzugt sind erfindungsgemäße Mischungen bestehend aus 50 bis 99,9 Gew.-%, vorzugsweise 70 bis 99,9 Gew.-% der Komponenten A1, A2 und/oder A3 sowie 0,1 bis 50 Gew.-%, vorzugsweise 0,1 bis 30 Gew.-%, der Hilfs- und/oder Zusatzstoffe.

Darüber hinaus bevorzugt sind solche Polymermischungen, die die Polymerkomponenten A1, A2 und A3 enthalten.

### Komponente A1

Komponente A1 wird in Mengen von 5 - 95 Gew.-%, bevorzugt 10 - 90 Gew.-%, insbesondere 30-80 Gew.-%, ganz besonders bevorzugt 50-80 Gew.-%, eingesetzt.

Als Monomere A11 eignen sich Styrol und Styrolderivate wie α-Methylstyrol und kernalkylierte Styrole, wie p-Methylstyrol und/oder tert.-Butylstyrol. Bevorzugt werden Styrol, α-Methylstyrol und/oder p-Methylstyrol, insbesondere Styrol und/oder α-Methylstyrol, ganz besonders bevorzugt wird Styrol eingesetzt.

Als Monomere A12 werden vorzugsweise Acrylnitril und/oder Methacrylnitril eingesetzt. Besonders bevorzugt ist Acrylnitril.

Der Anteil an dem Monomer A11 in dem Copolymer A1 beträgt im Allgemeinen 60 bis 80 Gew.-%, vorzugsweise 60 bis 65 Gew.-%.
Der Anteil an dem Monomer A12 in dem Copolymer A1 beträgt im Allgemeinen 40 bis 20 Gew.-%, vorzugsweise 40 bis 35 Gew.-%.

Das Copolymer A1 kann darüber hinaus noch bis zu 20 Gew. % mindestens eines weiteren, copolymerisierbaren Monomeren A13 wie beispielsweise Methylacrylat, Ethylacrylat, Propylacrylat, Methylmethacrylat, Ethylmethacrylat, Phenylmaleinimid, Maleinsäureanhydrid, Acrylamid und/oder Vinylmethylether enthalten.

Bevorzugte Copolymere A1 sind Copolymere von Styrol und Acrylnitril und/oder Copolymere von α-Methylstyrol und Acrylnitril. Besonders bevorzugt ist A1 ein Copolymer von Styrol und Acrylnitril.

Die Herstellung von A1 kann nach allgemein bekannten Methoden (DE-A 31 49 358, Seite 9, Zeilen 18 bis 32 und DE-A 32 27 555, Seite 9, Zeilen 18 bis 32) durchgeführt werden, beispielsweise durch allgemein bekannte Copolymerisation von A11, A12 und gegebenenfalls A13 in Masse, Lösung, Suspension oder wässriger Emulsion bei üblichen Temperaturen und Drücken in bekannten Apparaturen (Literaturstelle Kunststoff-Handbuch, Vieweg-Daumiller, Band V (Polystyrol), Carl-Hanser-Verlag, München 1969, S. 124, Z. 12 ff.).

### Komponente A2

Als Monomere A211 für die Herstellung der kautschukartigen Pfropfgrundlage A21 kommen im Allgemeinen Acrylsäurealkylester mit einem geradkettigen oder verzweigten Alkylrest mit 1 bis 12 Kohlenstoffatomen, bevorzugt 2 bis 8 Kohlenstoffatomen, besonders bevorzugt 4 bis 8 Kohlenstoffatomen, in Betracht. Bevorzugt sind Acrylsäurealkylester mit einem geradkettigen oder verzweigten Alkylrest mit 1 bis 12 Kohlenstoffatomen, bevorzugt 2 bis 8 Kohlenstoffatomen, besonders bevorzugt 4 bis 8 Kohlenstoffatomen, insbesondere Acrylsäure-n-butylester und/oder Acrylsäureethylhexylester. Die Acrylsäurealkylester können bei der Herstellung der Pfropfgrundlage A21 einzeln oder in Mischung eingesetzt werden.

Weiterhin enthält die kautschukartige Pfropfgrundlage A21 vorzugsweise 0.2 bis 0.6 Gew.-%, insbesondere 0.4 bis 0.5 Gew.-%, mindestens eines Allylmethacrylats A212 als Monomerkomponente. Bevorzugt ist Allylmethacrylat.

A212 wirkt als Vernetzer. Unter Vernetzern versteht man mindestens bifunktionale Monomere mit mindestens zwei reaktiven, ungesättigten Gruppen.

Als mögliche weitere, copolymerisierbare Monomere A214 können beispielsweise folgende Verbindungen Verwendung finden: Methylmethacrylat, Ethylmethacrylat, Phenylmaleinimid, Acrylamid, Vinylmethylether. Bevorzugt enthält die Pfropfgrundlage A21 kein Monomer A214.

Zur Herstellung der Pfropfhülle A22 geeignete Monomere A221 sind vinylaromatische Monomere wie Styrol und/oder Styrolderivate zum Beispiel Alkylstyrol, vorzugsweise α-Methylstyrol, und kernalkylierte Styrole, wie p-Methylstyrol und/oder tert.-Butylstyrol. Bevorzugt sind Styrol und/oder α-Methylstyrol, besonders bevorzugt Styrol.

Beispiele für polare, copolymerisierbare ungesättigte Monomere A222 sind Acrylnitril und/oder Methacrylnitril, vorzugsweise Acrylnitril.

Bevorzugt ist die Pfropfhülle A22 ein Copolymer von Styrol und/oder α-Methylstyrol und Acrylnitril, vorzugsweise von Styrol und Acrylnitril.

### Komponente A3

Als Monomere A311, A312 und A314 für die Pfropfgrundlage A31 werden die vorstehend für die Pfropfgrundlage A21 beschriebenen entsprechenden Verbindungen (A211, A212 und A214) verwendet.

Die Monomerkomponente A312, d.h. Allylmethacrylat, wird jedoch in einer Menge von 0.1 bis 0.4 Gew.-%, insbesondere 0.1 bis 0.2 Gew.-% eingesetzt.

Als Monomere A321 undA322 für die Pfropfhülle A32 werden ebenfalls die vorstehend für die Pfropfhülle A22 beschriebenen entsprechenden Verbindungen (A221 undA222) verwendet.

Gemäß einer bevorzugten Ausführungsform enthält die erfindungsgemäße Polymermischung aus den Polymerkomponenten A1 und A2 und/oder A3:
A1: 5 bis 95 Gew.-% eines Copolymeren A1 aus
   A11: 60 bis 80 Gew.-% Styrol oder α-Methylstyrol A11,
   A12: 40 bis 20 Gew.-% Acrylnitril A12,
A2: 5 bis 50 Gew.-% eines Pfropfcopolymeren A2 mit einer mittleren Teilchengröße von 90 bis 280 nm, aus
   A21: 60 bis 80 Gew.-% einer kautschukartigen Pfropfgrundlage A21 mit einer Tg < 0 °C aus
      A211: maximal 99.9 Gew.-% mindestens eines Acrylsäurealkylesters mit 1 bis 8 Kohlenstoffatomen im Alkylrest A211,
      A212: 0.1 bis 0.6 Gew.-% Allylmethacrylat A212,
   A22: 20 bis 40 Gew.-% mindestens einer Pfropfhülle aus:
      A221: 65 bis 70 Gew.-% Styrol oder α-Methylstyrol A221,
      A222: 30 bis 35 Gew.-% Acrylnitril A222,
   und/oder
A3: 5-50 Gew.-% eines Pfropfcopolymeren A3 mit einer Teilchengröße zwischen 300 und 600 nm, aus
   A31: 60 bis 80 Gew.-% mindestens einer kautschukartigen Pfropfgrundlage A31 mit einer Tg < 0 °C aus
      A311: maximal 99.9 Gew.% mindestens eines Acrylsäurealkylesters mit 1 bis 8 Kohlenstoffatomen im Alkylrest A311,
      A312: 0.1 bis 0.5 Gew % Allylmethacrylat A312
   A32: 20 bis 40 Gew.-% mindestens einer Pfropfhülle aus:
      A321: 65 bis 70 Gew.-% Styrol oder α-Methylstyrol A321,
      A322: 30 bis 35 Gew.-% Acrylnitril A322,
wobei das Gewichtsverhältnis von Komponente A2 zu Komponente A3 (wenn beide vorhanden sind) von 3:1 bis 1:1 beträgt, und sich die Gewichtsanteile der Polymerkomponenten A1, A2 und/oder A3 zu 100 Gew.-% ergänzen.

Weiterhin bevorzugt sind erfindungsgemäße Polymermischungen enthaltend die Komponenten A1, A2 und A3, worin A212 in einer Menge von 0.2 bis 0.6, insbesondere von 0.4 bis 0.5, und A312 in einer Menge von 0.1 bis 0.4, insbesondere von 0.1 bis 0.2, Gew.-% enthalten sind.

Die Herstellung von Pfropfcopolymeren aus einer elastomeren kautschukartigen Pfropfgrundlage und einer Propfhülle ist allgemein bekannt (siehe z.B. DE 4006643 A1, Seite 2, Zeile 65 bis Seite 3, Zeile 43; DE 4131729 A1 Seite 3, Zeile 12 bis Seite 4, Zeile 49).

Die Herstellung von feinteiligen Pfropfcopolymeren kann beispielsweise wie in DE 4006643 A1 (Seite 2, Zeile 65 bis Seite 3, Zeile 43) beschrieben erfolgen.

Die Herstellung von grobteiligen Propfcopolymeren kann durch Pfropfung in zwei Stufen wie in DE 3227555 A1 (Komponente B: Seite 8, Zeile 14 bis Seite 10, Zeile 5) und DE-A 31 49 358 (Seite 8, Zeile 14 bis Seite 10, Zeile 5) beschrieben erfolgen.

Zur Herstellung der Pfropfcopolymeren A2 wird im Allgemeinen zunächst das als Pfropfgrundlage dienende kautschukartige Acrylsäureester-Polymerisat A21 z.B. durch Emulsionspolymerisation hergestellt, indem man beispielsweise Alkylacrylat A211 und den Vernetzer A212 und gegebenenfalls A214 beispielsweise in wässriger Emulsion in an sich bekannter Weise bei Temperaturen zwischen 20 und 100 °C, vorzugsweise zwischen 50 und 80 °C polymerisiert. Auf diesem dabei entstehenden Polyacrylsäureester-Latex kann ein Gemisch von vinylaromatischen Monomeren A221 mit einem polaren, copolymerisierbaren ungesättigten Monomeren A222 aufgepfropft werden, wobei die Pfropfmischpolymerisation ebenfalls vorzugsweise in wässriger Emulsion durchgeführt wird.

Die Herstellung der Pfropfcopolymeren A3 erfolgt für die Propfgrundlage A31 wie zuvor für A2 beschrieben, aber die Pfropfung erfolgt üblicherweise in zwei Stufen, wobei im Allgemeinen zuerst das vinylaromatische Monomer A321 in Gegenwart der Pfropfgrundlage A31 polymerisiert wird. In der zweiten Stufe kann dann die Pfropfmischpolymerisation mit einem Gemisch enthaltend mindestens ein vinylaromatisches Monomer A321 und mindestens ein polares, copolymerisierbares Monomer A322 durchgeführt werden.

Die eingesetzten und in der erfindungsgemäßen Polymermischung enthaltenen Mengen der verschiedenen Komponenten sind bereits eingangs beschrieben worden.

Des weiteren können bei der Polymerisation die üblichen Hilfs- und/oder Zusatzstoffe Verwendung finden, beispielsweise Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, Polymerisationsinitiatoren wie z.B. übliche Persulfate, beispielsweise Kaliumpersulfat oder bekannte Redox-Systeme, Polymerisationshilfsstoffe wie z.B. übliche Puffersubstanzen, durch welche pH-Werte von vorzugsweise 6 bis 9 eingestellt werden, z.B. Natriumbicarbonat und/oder Natriumpyrophosphat, und/oder Molekulargewichtsregler, beispielsweise Mercaptane, Terpinole und/oder dimeres α-Methylstyrol, wobei die Molekulargewichtsregler üblicherweise in einer Menge von 0 bis 3 Gew.-%, bezogen auf das Gewicht der Reaktionsmischung, eingesetzt werden.

Zur Herstellung der erfindungsgemäßen Polymermischung werden die vorbeschriebenen teilchenförmigen Pfropfpolymerisate A2 und/oder A3 in die Hartkomponente, dh. das Copolymer A1, eingearbeitet. Die Einarbeitung kann zum Beispiel dadurch erfolgen, dass das teilchenförmige Pfropfpolymerisat durch Zugabe eines Elektrolyten aus der Emulsion isoliert wird und anschließend, gegebenenfalls nach Trocknung, durch gemeinsames Extrudieren, Kneten oder Walzen mit der Hartkomponente vermischt wird. Bei der Herstellung dieser Mischung können auch die nachstehenden Hilfs-/und oder Zusatzstoffe zugesetzt werden.

Als Hilfs- und/oder Zusatzstoffe können beispielsweise Weichmacher, Antistatika, Lichtschutzmittel, Gleitmittel, Treibmittel, Haftvermittler, gegebenenfalls weitere verträgliche thermoplastische Kunststoffe, Füllstoffe, oberflächenaktive Substanzen, Flammschutzmittel, Farbstoffe und Pigmente, Stabilisatoren gegen Oxidation, Hydrolyse, Licht, Hitze oder Verfärbung und/oder Verstärkungsmittel enthalten sein.

Als Lichtschutzmittel können alle üblichen Lichtschutzmittel eingesetzt werden, beispielsweise Verbindungen auf Basis von Benzophenon, Benztriazol, Zimtsäure, organischen Phosphiten und Phosphoniten sowie sterisch gehinderte Amine.

Als Gleitmittel kommen beispielsweise Kohlenwasserstoffe wie Öle, Paraffine, PE-Wachse, PP-Wachse, Fettalkohole mit 6 bis 20 Kohlenstoffatomen, Ketone, Carbonsäuren wie Fettsäuren, Montansäure oder oxidiertes PE-Wachs, Carbonsäureamide sowie Carbonsäureester, z.B. mit den Alkoholen, Ethanol, Fettalkoholen, Glycerin, Ethandiol, Pentaerythrit und langkettigen Carbonsäuren als Säurekomponente in Betracht.

Als Stabilisatoren können übliche Antioxidantien, beispielsweise phenolische Antioxidantien, z.B. alkylierte Monophenole, Ester und/oder Amide der b-(3,5-di-tertierbutyl-4-hydroxyphenyl-propionsäure und/oder Benztriazole eingesetzt werden. Beispielhaft sind mögliche Antioxidantien in EP-A 698637 und EP-A 669367 erwähnt. Konkret kann man als phenolische Antioxidantien 2,6-Ditertierbutyl-4-methylphenol, Pentaerythrityltetrakis-[3-(3,5-ditertiärbutyl-4-hydroxyphenyl)-propionat und N,N'-Di-(3,5-ditertiärbutyl-4-hydroxyphenyl-propionyl)-hexamethylendiamin erwähnen. Die genannten Stabilisatoren können einzeln oder in Mischungen verwendet werden.

Weitere verträgliche thermoplastische Kunststoffe können beispielsweise Polyester (z.B. Polyethylenterephthalat, Polybutylenterephthalat), PMMA, Polycarbonat, Polyamid, Polyoxymethylen, Polystyrol, Polyethylen, Polypropylen, Polyvinylchlorid sein.

Diese Hilfs- und/oder Zusatzstoffe können sowohl bereits bei der Herstellung der thermoplastischen Komponente A1 eingesetzt werden, als auch der Komponente A1, A2 und/oder A3 bei der Herstellung der Mischung zugesetzt werden.

Weiterer Gegenstand der Erfindung sind Formteile hergestellt aus den erfindungsgemäßen Polymermischungen.
Die erfindungsgemäßen Polymermischungen können beispielsweise pelletiert oder granuliert, oder nach allgemein bekannten Verfahren, beispielsweise durch Extrusion, Spritzguss, Blasformen oder Kalandierung zu Formteilen aller Art wie Kabelummantelungen, Folien, Schläuchen, Fasern, Profilen, Schuhschalen, Schuhsohlen, technischen Formteilen, Gebrauchsartikeln, Beschichtungen, Faltenbalgen und/oder Tierohrmarken verarbeitet werden.

Die erfindungsgemäßen Polymermischungen zeichnen sich insbesondere bei tiefen Temperaturen im Bereich von 0 bis -30°C durch ein optimiertes Zähigkeits/Steifigkeitsverhältnis bei Erhalt des Glanzes aus.

Daher können die erfindungsgemäßen Polymermischungen besonders vorteilhaft zur Herstellung von Formteilen verwendet werden, die im Tieftemperaturbereich von 0 bis-30°C eingesetzt werden. Beispielhaft ohne darauf zu beschränken seien in diesem Zusammenhang Außenanwendungen z.B. im Automobil- oder Bausektor genannt.

Ein Gegenstand der Erfindung ist die Herstellung der Polymermischungen durch Vermischen der Komponenten.

Weiterer Gegenstand der Erfindung ist daher die Verwendung von aus den erfindungsgemäßen Polymermischungen hergestellten Formteilen für Außenanwendungen.

Die erfindungsgemäßen Polymermischungen und Anwendungen werden anhand der folgenden Beispiele und Ansprüche näher beschrieben.

### Beispiele:

Die in der vorliegenden Anmeldung beschriebenen Parameter wurden wie folgt bestimmt:
Kerbschlagzähigkeit und Schlagzähigkeit (kJ/m²): gemessen nach DIN 53 453 (ISO 179 1 eA) bei 23, 0, -30°C, sowie 220 °C Spritzgusstemperatur an gespritzten Normkleinstäben. Untersucht wurden jeweils drei Probenserien. Die gefundenen Ergebnisse sind in den Tabellen 3-5 zusammengefasst.

Die mittlere Teilchengröße wird mithilfe der Ultrazentrifuge gemäß der Methode von W. Scholtan und H. Lange, Kolloid-Z. und Z. Polymere 250 (1972), 782-796 bestimmt. Die Ultrazentrifugen-Messung ergibt die integrale Massenverteilung der Teilchen einer Probe. Der mittlere Teilchendurchmesser d50 ist definiert als der Durchmesser, bei dem 50 Gew.-% der Teilchen kleinere und 50 Gew.-% der Teilchen größere Durchmesser als der d50-Wert haben.

Der Durchstoß wird nach ISO 6603-2/40/20/c bestimmt.
Der Glanz wird nach DIN 67530 bei 60° gemessen.
Der E-Modul wird nach ISO 527-2:1993 bestimmt.
Der MVR (220/10) wird nach ISO 1133 bestimmt.

Komponente A1: Copolymer hergestellt mit 67 Gew.-% Styrol als A11 und 33 Gew.-% Acrylnitril als A12, VZ; Viskositätszahl (gemessen in 0,5%iger Toluol-Lösung bei Raumtemperatur): 80 ml/g

Die Komponente A1 wurde hergestellt nach einem Lösungspolymerisationsverfahren wie es beispielhaft beschrieben ist in: Kunststoff-Handbuch, Hrsg. Vieweg-Daumiller, Band V (Polystyrol), Carl-Hanser-Verlag, München, 1969, Seite 124, Zeile 12 ff.

### Komponente A2:

### Herstellung der Pfropfgrundlage

Die Herstellung der jeweiligen Pfropfgrundlage erfolgte nach folgender allgemeiner Vorschrift: 160 g des in Tabelle 1 angegebenen Monomeren-Gemisches wurden in 1500 g Wasser unter Zusatz von 5 g des Natriumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 60°C erwärmt. 10 Minuten nach dem Anspringen der Polymerisationsreaktion wurden innerhalb von 3 Stunden weitere 840 g der Monomeren-Mischung gemäß Tabelle 1 zugegeben. Nach Beendigung der Monomerzugabe wurde die Emulsion noch eine Stunde bei 60°C gehalten.

### Herstellung der teilchenförmigen Pfropfpolymerisate

2100 g der nach Vorschrift (1) hergestellten Emulsion wurden mit 1150 g Wasser und 2,7 g Kaliumperoxodisulfat gemischt und unter Rühren auf 65°C erwärmt. Nach Erreichen der Reaktionstemperatur wurde im Laufe von 3 Stunden eine Mischung aus 420 g Styrol (S) und 140 g Acrylnitril (AN) zudosiert. Nach Beendigung der Zugabe wurde die Emulsion noch 2 Stunden bei 65°C gehalten. Das Pfropfpolymerisat wurde mittels Calciumchloridlösung bei 95°C aus der Emulsion gefällt, mit Wasser gewaschen und im warmen Luftstrom getrocknet.

Es wurden verschiedene Pfropfcopolymere A2 mit 0,1 bis 1,0 Gew.-% Allylmethacrylat (AMA) als Vernetzer hergestellt. Die mittlere Teilchengröße des erhaltenen Pfropfcopolymers A2 betrug 95-105 nm. Zusätzlich wurden Vergleichsversuche V1 und V2 mit DCPA (gemäß DE 4006643 A1, S.5, Tabelle) anstelle von AMA durchgeführt.

**Tabelle 1: Monomerzusammensetzung Pfropfcopolymer A2**

| | Pfropfgrundlage | | | | | Pfropfhülle (Gew.-%) | |
|---|---|---|---|---|---|---|---|
| | BA | DCPA (Gew.-%) | DCPA (Mol) | AMA (Gew.-%) | AMA (Mol) | S | AN |
| V1 | 99.0 | 1.0 | 0.176 | - | - | 75 | 25 |
| V2 | 98.0 | 2.0 | 0.352 | - | - | 75 | 25 |
| A2-1 | 99.9 | - | - | 0.1 | 0.029 | 75 | 25 |
| A2-2 | 99.6 | - | - | 0.4 | 0.116 | 75 | 25 |
| A2-3 | 99.0 | - | - | 1.0 | 0.290 | 75 | 25 |

| | | | | | | | |
|---|---|---|---|---|---|---|---|
| Mol bezogen auf 9.0 kg Ansatz | | | | | | | |

### Komponente A3:

Herstellung der Pfropfgrundlage A31

Die nachfolgenden Mengenangaben für BA und AMA beziehen sich jeweils auf die Versuche A3-1/A3-2/A3-3 gemäß Tabelle 2.

16.31/16.26/16.21 Teile Butylacrylat (BA) und 0.02/0.08/0.15 Teile Allylmethacrylat (AMA) werden in 150 Teilen Wasser unter Zusatz von einem Teil des Natriumsalzes einer C₁₂-C₁₈-Paraffinsulfonsäure, 0,3 Teilen Kaliumpersulfat, 0,3 Teilen Natriumhydrogencarbonat und 0,15 Teilen Natriumphosphat unter Rühren auf 60°C erwärmt. 10 Minuten nach dem Anspringen der Polymerisationsreaktion wurden innerhalb von 3 Stunden eine Mischung aus 83.59/83.34/83.04 Teilen Butylacrylat und 0.08/0.32/0.60 Teilen Allylmethacrylat zugegeben. Nach Beendigung der Monomerzugabe ließ man noch eine Stunde nachreagieren. Der erhaltene Latex des vernetzten Butylacrylat-Polymerisats hatte einen Feststoffgehalt von 40 Gew.-%. Die mittlere Teilchengröße (Gewichtsmittel) wurde zu 83/78/80 nm ermittelt. Die Teilchengrößenverteilung war eng (Quotient Q = 0,20).

Herstellung eines grobteiligen Pfropfmischpolymers A3
Zu einer Vorlage aus 1,5 Teilen des vorstehend beschriebenen Latex A31 wurden nach Zugabe von 50 Teilen Wasser und 0,1 Teilen Kaliumpersulfat im Verlauf von 3 Stunden einerseits eine Mischung aus 49.95/49.80/49.625 Teilen Butylacrylat und 0.05/0.20/0.375 Teilen Allylmethacrylat und andererseits eine Lösung von 0,5 Teilen des Natriumsalzes einer C₁₂-C₁₈-Paraffinsulfonsäure in 25 Teilen Wasser bei 60°C zugegeben. Nach Zulaufende wurde 2 Stunden nachpolymerisiert. Der erhaltene Latex des vernetzten Butylacrylat-Polymerisats hatte einen Feststoffgehalt von 40%.
Die mittlere Teilchengröße (Gewichtsmittel des Latex) wurde zu 473/459/460 nm ermittelt. Die Teilchengrößenverteilung war eng (Q = 0,15).

150 Teile dieses Latex wurden nun mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die bei der Pfropfmischpolymerisation erhaltene Dispersion wurde dann mit 20 Teilen eines Gemisches aus Styrol und Acrylnitril im Verhältnis 75:25 weitere 4 Stunden polymerisiert. Das Reaktionsprodukt wurde dann mit einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisates wurde zu 40% ermittelt; die mittlere Teilchengröße der Latexteilchen betrug 564/545/551 nm.

Es wurden verschiedene Pfropfcopolymere A3 mit 0,1 bis 0,75 Gew.-% Allylmethacrylat als Vernetzer hergestellt (Tabelle 2).
Zusätzlich wurden Vergleichsversuche V3 und V4 mit DCPA (gemäß DE 4131729 A1, S. 6, Tabelle 1) anstelle von AMA durchgeführt.

**Tabelle 2: Monomerzusammensetzung Pfropfcopolymer A3**

| | Pfropfgrundlage | | | | | Pfropfhülle (Gew.-%) | |
|---|---|---|---|---|---|---|---|
| | BA | DCPA (Gew.-%) | DCPA (Mol) | AMA (Gew.-%) | AMA (Mol) | S | AN |
| V3 | 99.0 | 1.0 | 0.176 | - | - | 75 | 25 |
| V4 | 98.0 | 2.0 | 0.352 | - | - | 75 | 25 |
| A3-1 | 99.9 | - | - | 0.1 | 0.029 | 75 | 25 |
| A3-2 | 99.6 | - | - | 0.4 | 0.116 | 75 | 25 |
| A3-3 | 99.0 | - | - | 0.75 | 0.217 | 75 | 25 |

| | | | | | | | |
|---|---|---|---|---|---|---|---|
| Mol bezogen auf 9.0 kg Ansatz | | | | | | | |

Zur Herstellung der erfindungsgemäßen Mischungen A1 und A2 (Tabelle 3), A1 und A3 (Tabelle 4) sowie A1, A2 und A3 (Tabelle 5) wurden die jeweiligen Komponenten in einem Extruder (ZSK 30 Doppelschneckenextruder der Fa. Werner & Pfleiderer) bei einer Temperatur von 230°C innig vermischt. Die jeweiligen Gewichtsverhältnisse betrugen bei der Mischung von A1 und A2 70:30, bei der Mischung von A1 und A3 70:30, sowie bei der Mischung von A1, A2 und A3 70:20:10.

Die Herstellung der Mischungen für die Vergleichsversuche mit DCPA als Vernetzerkomponente erfolgte ebenfalls wie zuvor beschrieben.

Die erhaltenen Mischungen wurden hinsichtlich verschiedener mechanischer Eigenschaften und des Glanzes untersucht. Die Ergebnisse sind in den Tabellen 3 bis 5 zusammengefasst.

**Tabelle 3: Polymermischung aus A1 und A2**

| | Vernetzer (Gew.-%) | Kerbschlagzähigkeit | | | Schlagzähigkeit | | | Glanz |
|---|---|---|---|---|---|---|---|---|
| | | 23°C | 0°C | -30°C | 23°C | 0°C | -30°C | (60°) |
| V1 | 2.0% (0.353 Mol) DCPA | 8,0 | 6,4 | 2,5 | - | 248 | 100 | 93 |
| V2 | 1.0% (0.176 Mol) DCPA | 5,9 | 5,4 | 2,5 | - | 240 | 119 | 88 |
| 1 | 0.1% (0.029 Mol) AMA | 3,5 | 3,2 | 2,2 | 129 | 165 | 83 | 88 |
| 2 | 0.16% (0.046 Mol) AMA | 5,4 | 5,2 | 2,5 | 179 | 191 | 103 | 91 |
| 3 | 0.25% (0.0725 Mol) AMA | 10,9 | 8,6 | 4,1 | 185 | 132 | 92 | 97 |
| 4 | 0.4% (0.116 Mol) AMA | 12,0 | 10,4 | 4,6 | 233 | 199 | 139 | 97 |
| 5 | 0.5% (0.145 Mol) AMA | 9,3 | 7,8 | 2,7 | 252 | 141 | 83 | 97 |
| 6 | 0.75% (0.217 Mol) AMA nicht erfindungsgemäß | 9,1 | 6,6 | 2,1 | 177 | 133 | 67 | 96 |
| 7 | 1.0% (0.290 Mol) AMA nicht erfindungsgemäß | 6,4 | 5,0 | 1,4 | 188 | 123 | 41 | 97 |

| | | | | | | | | |
|---|---|---|---|---|---|---|---|---|
| Mol bezogen auf 9.0 kg Ansatz V1, V2: Vergleichsversuch mit DCPA anstelle von AMA | | | | | | | | |

Die erfindungsgemäßen Polymermischungen gemäß Tabelle 3 aus A1 und A2 zeigen, dass durch den Einsatz eines Pfropfcopolymers A2 enthaltend Allylmethacrylat (AMA) A212 bereits durch geringe Mengen, d.h. 0,1 bis 0,5 Gew.-%, Allylmethacrylat eine erhebliche Verbesserung der Kerbschlagzähigkeit und der Schlagzähigkeit bei niedrigen Temperaturen, insbesondere bei - 30°C, sogar unter Erhöhung des Glanzes erzielt wird.

Entsprechende Vergleichsversuche V1 und V2 unter Verwendung von DCPA als vernetzende Komponente des Pfropfcopolymeren zeigen bei Reduktion von 2 auf 1 Gew.-% DCPA-Anteil bereits eine Glanzreduktion. Bei Einsatz von DCPA in Mengen von 0.2 bis 0.8 Gew.-% zeigt das entsprechende ASA-Produkt deutlich matte Oberflächen, welche nicht erwünscht sind.

**Tabelle 4: Polymermischung aus A1 und A3**

| | Vernetzer (Gew..-%) | Kerbschlagzähigkeit | | | Schlagzähigkeit | | | Glanz |
|---|---|---|---|---|---|---|---|---|
| | | 23°C | 0°C | -30°C | 23°C | 0°C | -30°C | (60°) |
| V3 | 2.0% (0.353 Mol) DCPA | 11.8 | 8.8 | 3.4 | 185 | 143 | 95 | 99 |
| V4 | 1.0% (0.176 Mol) DCPA | 11.8 | 8.7 | 3.4 | 198 | 147 | 120 | 98 |
| 1 | 0.1 % (0.029 Mol) AMA | 12.8 | 11.5 | 5.0 | 182 | 130 | 90 | 99 |
| 2 | 0.16% (0.046 Mol) AMA | 12.5 | 9.9 | 5.0 | - | 171 | 124 | 99 |
| 3 | 0.2% (0.058 Mol) AMA | 12.5 | 10.3 | 5.1 | - | 154 | 114 | 99 |
| 4 | 0.4% (0.116 Mol) AMA | 12,1 | 9.3 | 5.0 | - | 218 | 132 | 100 |
| 5 | 0.5% (0.145 Mol) AMA nicht erfindungsgemäß | 11.2 | 9.0 | 4.8 | - | 228 | 118 | 99 |
| 6 | 0.75% (0.217 Mol) AMA nicht erfindungsgemäß | 9.6 | 8.4 | 4.7 | - | 178 | 126 | 99 |

| | | | | | | | | |
|---|---|---|---|---|---|---|---|---|
| Mol bezogen auf 9.0 kg Ansatz V3, V4: Vergleichsversuche | | | | | | | | |

Die erfindungsgemäßen Polymermischungen gemäß Tabelle 4 aus A1 und A3 zeigen, dass durch den Einsatz eines grobteiligen Pfropfcopolymers A3, welches Allylmethacrylat (AMA) A312 in nur geringen Mengen (0,1 bis 0,5 Gew.-%) enthält, eine erhebliche Verbesserung der Kerbschlagzähigkeit und der Schlagzähigkeit bei niedrigen Temperaturen z.B. bei - 30°C, unter Erhalt des Glanzes erzielt wird. Die mechanischen Eigenschaften der erfindungsgemäßen Polymermischungen sind unter Erhalt des Glanzes größtenteils sogar besser als bei Verwendung von DCPA in deutlich größeren Mengen.

Diese Ergebnisse konnten nicht erwartet werden und sind für den Fachmann überraschend, da gemäß allgemeinem Fachwissen mit zunehmendem Vernetzer-Gehalt ein erhöhter bzw. verbesserter Glanz erzielt wird (vgl. z.B .US 6,476,128). Demgegenüber zeigt ein entsprechendes ASA-Produkt bei Einsatz von DCPA in einem Konzentrationsbereich unter 1 Gew.-% deutlich matte Oberflächen.

**Tabelle 5: Polymermischung aus A1, A2 und A3**

| | | Kerbschlagzähigkeit Ak [kJ/m²] | | | Schlagzähigkeit An [kJ/m²] | | | Emodulus [MPa] | MVR (220/10) | Durchstoß [kJ/m²] | |
|---|---|---|---|---|---|---|---|---|---|---|---|
| | A2, A3 | 23°C | 0°C | -30°C | 23°C | 0°C | -30°C | | | 23°C | -20°C |
| V1 | 2.0 Gew.-% (0.353Mol) DCPA | 8.9 | 7.4 | 2.7 | - | 144 | 93 | 2434 | 7.4 | 28.3 | 6.6 |
| 2 | 0.16 Gew.-% (0.046Mol) AMA | 10.9 | 8.2 | 3.6 | - | 153 | 110 | 2455 | 8.0 | 39.8 | 12.8 |
| 3 | 0.4 Gew.-% (0.115Mol) AMA | 10.5 | 6.5 | 2.0 | - | 159 | 105 | - | 8.1 | - | - |
| 4 | A2: 0.4 Gew.-% (0.115Mol) AMA A3: 0.2 Gew.-% (0.0575Mol) AMA | 12.2 | 7.0 | 2.1 | - | 181 | 101 | - | 8.3 | - | - |

| | | | | | | | | | | | |
|---|---|---|---|---|---|---|---|---|---|---|---|
| Mol bezogen auf 9.0 kg Ansatz | | | | | | | | | | | |

Die angegebenen Vernetzer-Mengen wurden unabhängig voneinander jeweils für Komponente A2 und A3 eingesetzt. Der Vergleichsversuch wurde entsprechend durchgeführt, jedoch unter Verwendung von 2 Gew.-% DCPA an Stelle von AMA.

Die erfindungsgemäßen Polymermischungen gemäß Tabelle 5 aus A1, A2 und A3 zeigen, dass durch den Einsatz der Pfropfcopolymere A2 und A3, die Allylmethacrylat jeweils in nur geringen Mengen enthalten, eine erhebliche Verbesserung der Kerbschlagzähigkeit und der Schlagzähigkeit auch bei niedrigen Temperaturen erzielt wird.

Entsprechende Vergleichsversuche gemäß dem Stand der Technik unter Verwendung von DCPA als vernetzender Komponente führen zu deutlich schlechteren Ergebnissen, obwohl DCPA in größeren Mengen, nämlich in einer Menge von jeweils 2 Gew.-% für das groß- und feinteilige Pfropfcopolymer, eingesetzt wurde.

Aus den beschriebenen Polymermischungen können nach gängigen Methoden Formteile hergestellt werden, die sich insbesondere auch für Außenanwendungen eignen und die ein verbessertes Zähigkeits-/Steifigkeits-Verhältnis und gute optischen Eigenschaften aufweisen.

## Patentansprüche

1. Polymermischung aus den Polymerkomponenten A1 und A2 und/oder A3:
A1: 5 bis 95 Gew.-% eines Copolymeren A1 aus
A11: 60 bis 80 Gew.-% mindestens eines Styrols oder Styrolderivats A11,
A12: 40 bis 20 Gew.-% mindestens eines eine Nitrilgruppe enthaltenden ethylenisch ungesättigten Monomeren A12,
A13: 0 bis 20 Gew. % mindestens eines weiteren, copolymerisierbaren Monomeren A13;
A2: 5 bis 50 Gew.-% eines Pfropfcopolymeren A2 mit einer mittleren Teilchengröße von 90 bis 280 nm, aus:
A21: 60 bis 80 Gew.-% mindestens einer kautschukartigen Pfropfgrundlage A21 mit einer Tg < 0 °C aus
A211: 70 bis 99.9 Gew.% mindestens eines Alkylacrylats A211,
A212: 0.1 bis 0.6 Gew % mindestens eines Allylmethacrylats A212, A214: 0 bis 29.9 Gew.% mindestens eines weiteren der folgenden copolymerisierbaren Monomeren A214: Methylmethacrylat, Ethylmethacrylat, Phenylmaleinimid, Acrylamid, Vinylmethylether,
A22: 20 bis 40 Gew.% mindestens einer Pfropfhülle aus:
A221: 65 bis 70 Gew.-% mindestens eines vinylaromatischen Monomeren A221,
A222: 30 bis 35 Gew.-% mindestens eines polaren, copolymerisierbaren ungesättigten Monomeren A222; und/oder
A3: 5 bis 50 Gew.-% eines Pfropfcopolymeren A3 mit einer Teilchengröße zwischen 300 und 600 nm, aus:
A31: 60 bis 80 Gew.-% mindestens einer kautschukartigen Pfropfgrundlage A31 mit einer Tg < 0 °C aus:
A311: 70 bis 99.9 Gew.-% mindestens eines Alkylacrylats A311,
A312: 0.1 bis 0.4 Gew % mindestens eines Allylmethacrylats A312,
A314: 0 bis 29.9 Gew.-% mindestens eines weiteren der folgenden copolymerisierbaren Monomeren A314: Methylmethacrylat, Ethylmethacrylat, Phenylmaleinimid, Acrylamid, Vinylmethylether,
A32: 20 bis 40 Gew.-% mindestens einer Pfropfhülle aus:
A321: 65 bis 70 Gew.-% mindestens einem vinylaromatischen Monomeren A321,
A322: 30 bis 35 Gew.-% mindestens eines polaren, copolymerisierbaren ungesättigten Monomeren A322,
wobei sich die Gewichtsanteile der Polymerkomponenten A1, A2 und/oder A3 zu 100 Gew.-% ergänzen.

2. Polymermischung gemäß Anspruch 1, **dadurch gekennzeichnet, dass** sie zusätzlich Hilfs- und/oder Zusatzstoffe enthält.

3. Polymermischung gemäß Anspruch 1 oder 2, **dadurch gekennzeichnet, dass** das vinylaromatische Monomer A221 und A321 Styrol und/oder α-Methylstyrol ist.

4. Polymermischung gemäß mindestens einem der Ansprüche 1 bis 3, **dadurch gekennzeichnet, dass** das polare Monomer A222 und A322 Acrylnitril und/oder Methacrylnitril ist.

5. Polymermischung gemäß mindestens einem der Ansprüche 1 bis 4, enthaltend:
A1: 5 bis 95 Gew.-% eines Copolymeren A1 aus
A11: 60 bis 80 Gew.-% Styrol oder α-Methylstyrol A11,
A12: 40 bis 20 Gew.-% Acrylnitril A12,
A2: 5 bis 50 Gew.-% eines Pfropfcopolymeren A2 mit einer mittleren Teilchengröße von 90 bis 280 nm, aus
A21: 60 bis 80 Gew.-% einer kautschukartigen Pfropfgrundlage A21 mit einer Tg < 0 °C aus
A211: maximal 99.9 Gew.-% mindestens eines Acrylsäurealkylesters mit 1 bis 8 Kohlenstoffatomen im Alkylrest A211,
A212: 0.1 bis 0.6 Gew.-% Allylmethacrylat A212,
A22: 20 bis 40 Gew.-% mindestens einer Pfropfhülle aus:
A221: 65 bis 70 Gew.-% Styrol oder α-Methylstyrol A221,
A222: 30 bis 35 Gew.-% Acrylnitril A222,
und/oder
A3: 5 bis 50 Gew.-% eines Pfropfcopolymeren A3 mit einer Teilchengröße zwischen 300 und 600 nm, aus
A31: 60 bis 80 Gew.-% mindestens einer kautschukartigen Pfropfgrundlage A31 mit einer Tg < 0 °C aus
A311: maximal 99.9 Gew.% mindestens eines Acrylsäurealkylesters mit 1 bis 8 Kohlenstoffatomen im Alkylrest A311,
A312: 0.1 bis 0.5 Gew % Allylmethacrylat A312
A32: 20 bis 40 Gew.-% mindestens einer Pfropfhülle aus:
A321: 65 bis 70 Gew.-% Styrol oder α-Methylstyrol A321,
A322: 30 bis 35 Gew.-% Acrylnitril A322,
wobei das Gewichtsverhältnis von Komponente A2 zu Komponente A3 (wenn beide vorhanden sind) von 3:1 bis 1:1 beträgt, und sich die Gewichtsanteile der Polymerkomponenten A1, A2 und/oder A3 zu 100 Gew.-% ergänzen.

6. Polymermischung aus den Polymerkomponenten A1, A2 und A3 gemäß mindestens einem der Ansprüche 1 bis 5, **dadurch gekennzeichnet, dass**
0.4 bis 0.5 Gew.-% Allylmethacrylat A212 und
0.1 bis 0.2 Gew.-% Allylmethacrylat A312 eingesetzt werden.

7. Formteil, hergestellt aus einer Polymermischung gemäß mindestens einem der Ansprüche 1 bis 6.

8. Verwendung von Formteilen gemäß Anspruch 7 für Außenanwendungen.

9. Verfahren zur Herstellung der Polymermischungen gemäß mindestens einem der Ansprüche 1 bis 6, bei dem die Polymerkomponenten A1 und A2 und/oder A3 und ggf. zusätzliche Hilfs- und/oder Zusatzstoffe vermischt werden.

## Claims

1. A polymer mixture of polymer components A1 and A2 and/or A3:
A1: from 5 to 95% by weight of a copolymer A1 of
A11: from 60 to 80% by weight of at least one styrene or styrene derivative A11,
A12: from 40 to 20% by weight of at least one ethylenically unsaturated monomer A12 comprising a nitrile group,
A13: from 0 to 20% by weight of at least one other, copolymerizable monomer A13;
A2: from 5 to 50% by weight of a graft copolymer A2 with median particle size from 90 to 280 nm, of:
A21: from 60 to 80% by weight of at least one rubber-like graft base A21 with Tg < 0°C made of
A211: from 70 to 99.9% by weight of at least one alkyl acrylate A211,
A212: from 0.1 to 0.6% by weight of at least one allyl methacrylate A212,
A214: from 0 to 29.9% by weight of at least one other of the following copolymerizable monomers A214: methyl methacrylate, ethyl methacrylate, phenylmaleimide, acrylamide, vinyl methyl ether,
A22: from 20 to 40% by weight of at least one graft shell made of:
A221: from 65 to 70% by weight of at least one vinylaromatic monomer A221,
A222: from 30 to 35% by weight of at least one polar, copolymerizable unsaturated monomer A222; and/or
A3: from 5-50% by weight of a graft copolymer A3 with particle size from 300 to 600 nm, of:
A31: from 60 to 80% by weight of at least one rubber-like graft base A31 with Tg < 0°C made of:
A311: from 70 to 99.9% by weight of at least one alkyl acrylate A311,
A312: from 0.1 to 0.4% by weight of at least one allyl methacrylate A312,
A314: from 0 to 29.9% by weight of at least one other of the following copolymerizable monomers A314: methyl methacrylate, ethyl methacrylate, phenylmaleimide, acrylamide, vinyl methyl ether,
A32: from 20 to 40% by weight of at least one graft shell made of:
A321: from 65 to 70% by weight of at least one vinylaromatic monomer A321,
A322: from 30 to 35% by weight of at least one polar, copolymerizable unsaturated monomer A322,
where the proportions by weight of polymer components A1, A2, and/or A3 give a total of 100% by weight.

2. The polymer mixture as claimed in claim 1, **characterized in that** it also comprises auxiliaries and/or additives.

3. The polymer mixture as claimed in claim 1 or 2, **characterized in that** the vinylaromatic monomer A221 and A321 is styrene and/or α-methylstyrene.

4. The polymer mixture as claimed in at least one of claims 1 to 3, **characterized in that** the polar monomer A222 and A322 is acrylonitrile and/or methacrylonitrile.

5. The polymer mixture as claimed in at least one of claims 1 to 4, **characterized in that**:
A1: from 5 to 95% by weight of a copolymer A1 of
A11: from 60 to 80% by weight of styrene or α-methylstyrene A11,
A12: from 40 to 20% by weight of acrylonitrile A12,
A2: from 5 to 50% by weight of a graft copolymer A2 with median particle size from 90 to 280 nm, of
A21: from 60 to 80% by weight of a rubber-like graft base A21 with Tg < 0°C made of
A211: at most 99.9% by weight of at least one alkyl acrylate having from 1 to 8 carbon atoms in the alkyl moiety A211,
A212: from 0.1 to 0.6% by weight of allyl methacrylate A212,
A22: from 20 to 40% by weight of at least one graft shell made of:
A221: from 65 to 70% by weight of styrene or α-methylstyrene A221,
A222: from 30 to 35% by weight of acrylonitrile A222,
and/or
A3: from 5-50% by weight of a graft copolymer A3 with particle size from 300 to 600 nm, of
A31: from 60 to 80% by weight of at least one rubber-like graft base A31 with Tg < 0°C made of
A311: at most 99.9% by weight of at least one alkyl acrylate having from 1 to 8 carbon atoms in the alkyl moiety A311,
A312: from 0.1 to 0.5% by weight of allyl methacrylate A312
A32: from 20 to 40 % by weight of at least one graft shell made of:
A321: from 65 to 70 % by weight of styrene or α-methylstyrene A321,
A322: from 30 to 35 % by weight of acrylonitrile A322,
where the ratio by weight of component A2 to component A3 (if both are present) is from 3:1 to 1:1, and the proportions by weight of polymer components A1, A2, and/or A3 give a total of 100 % by weight.

6. The polymer mixture of polymer components A1, A2, and A3 as claimed in at least one of claims 1 to 5, **characterized in that**:
from 0.4 to 0.5% by weight of allyl methacrylate A212 and
from 0.1 to 0.2% by weight of allyl methacrylate A312 are used.

7. A molding produced from a polymer mixture as claimed in at least one of claims 1 to 6.

8. The use of moldings as claimed in claim 7 for outdoor applications.

9. A process for the production of the polymer mixtures as claimed in at least one of claims 1 to 6, by mixing polymer components A1 and A2, and/or A3, and optionally additional auxiliaries and additives.

## Revendications

1. Mélange de polymères constitué des composants polymères A1 et A2 et/ou A3 :
A1 : 5 à 95 % en poids d'un copolymère A1, constitué
A11 : de 60 à 80 % en poids d'au moins un styrène ou un dérivé du styrène A11,
A12 : de 40 à 20 % en poids d'au moins un monomère A12 à insaturation éthylénique, contenant un groupe nitrile,
A13 : de 0 à 20 % en poids d'au moins un monomère copolymérisable A13 supplémentaire ;
A2 : 5 à 50 % en poids d'un copolymère greffé A2 ayant une granulométrie moyenne de 90 à 280 nm, constitué
A21 : de 60 à 80 % en poids d'au moins une base de greffage A21 de type caoutchouc, ayant une Tg < 0°C, constituée
A211 : de 70 à 99,9 % en poids d'au moins un acrylate d'alkyle A211,
A212 : de 0,1 à 0,6 % en poids d'au moins un méthacrylate d'allyle A212,
A214: de 0 à 29,9 % en poids d'un monomère supplémentaire parmi les monomères copolymérisables A214 ci-après : méthacrylate de méthyle, méthacrylate d'éthyle, phénylmaléimide, acrylamide, vinylméthyléther,
A22 : de 20 à 40 % en poids d'au moins une enveloppe de greffage, constituée :
A221 : de 65 à 70 % en poids d'au moins un monomère vinylaromatique A221,
A222 : de 30 à 35 % en poids d'au moins un monomère insaturé copolymérisable polaire A222 ;
et/ou
A3 : 5 à 50 % en poids d'un copolymère greffé A3 ayant une granulométrie comprise entre 300 et 600 nm, constitué :
A31 : de 60 à 80 % en poids d'au moins une base de greffage A31 de type caoutchouc ayant une Tg < 0°C, constituée :
A311 : de 70 à 99,9 % en poids d'au moins un acrylate d'alkyle A311,
A312 : de 0,1 à 0,4 % en poids d'au moins un méthacrylate d'allyle A312,
A314 : de 0 à 29,9 % en poids d'au moins un monomère supplémentaire parmi les monomères copolymérisables A314 ci-après : méthacrylate de méthyle, méthacrylate d'éthyle, phénylmaléimide, acrylamide, vinylméthyléther,
A32 : 20 à 40 % en poids d'au moins une gaine de greffage, constituée :
A321 : de 65 à 70 % en poids d'au moins un monomère vinylaromatique A321,
A322 : de 30 à 35 % en poids d'au moins un monomère insaturé copolymérisable A322,
la somme des proportions en poids des composants polymères A1, A2 et/ou A3 étant de 100 % en poids.

2. Mélange de polymères selon la revendication 1, **caractérisé en ce qu'**il contient en outre des adjuvants et/ou des additifs.

3. Mélange de polymères selon la revendication 1 ou 2, **caractérisé en ce que** le monomère vinylaromatique A221 et A321 est le styrène et/ou l'a-méthylstyrène.

4. Mélange de polymères selon au moins l'une des revendications 1 à 3, **caractérisé en ce que** le monomère polaire A222 et A322 est l'acrylonitrile et/ou le méthacrylonitrile.

5. Mélange de polymères selon au moins l'une des revendications 1 à 4, contenant :
A1 : 5 à 95 % en poids d'un copolymère A1 constitué
A11 : de 60 à 80 % en poids de styrène et/ou d'α-méthylstyrène A11,
A12 : de 40 à 20 % en poids d'acrylonitrile A12,
A2 : 5 à 50 % en poids d'un copolymère greffé A2 ayant une granulométrie moyenne de 90 à 280 nm, constitué
A21 : de 60 à 80 % en poids d'une base de greffage A21 de type caoutchouc ayant une Tg < 0°C, constituée
A211 : au maximum de 99,9 % en poids d'au moins un ester alkylique de l'acide acrylique ayant 1 à 8 atomes de carbone dans le résidu alkyle A211,
A212 : de 0,1 à 0,6 % en poids de méthacrylate d'allyle A212,
A22 : de 20 à 40 % en poids d'au moins une gaine de greffage, constituée :
A221 : de 65 à 70 % en poids de styrène ou d'α-méthylstyrène A221,
A222 : de 30 à 35 % en poids d'acrylonitrile A222,
et/ou
A3 : 5 à 50 % en poids d'un copolymère greffé A3 ayant une granulométrie comprise entre 300 et 600 nm, constitué
A31 : de 60 à 80 % en poids d'au moins une base de greffage A31 de type caoutchouc, ayant une Tg < 0°C, constituée
A311 : au maximum de 99,9 % en poids d'au moins un ester alkylique de l'acide acrylique ayant 1 à 8 atomes de carbone dans le résidu alkyle A311,
A312 : 0,1 à 0,5 % en poids de méthacrylate d'allyle A312,
A32 : de 20 à 40 % en poids d'au moins une gaine de greffage, constituée :
A321 : de 65 à 70 % en poids de styrène ou d'α-méthylstyrène A321,
A322 : de 30 à 35 % en poids d'acrylonitrile A322,
le rapport en poids du composant A2 au composant A3 (quand les deux sont présents) étant de 3:1 à 1:1, et la somme des proportions en poids des composants polymères A1, A2 et/ou A3 étant de 100 % en poids.

6. Mélange de polymères, constitué des composants polymères A1, A2 et A3 selon au moins l'une des revendications 1 à 5, **caractérisé en ce qu'**on utilise
0,4 à 0,5 % en poids de méthacrylate d'allyle A212, et
0,1 à 0,2 % en poids de méthacrylate d'allyle A312.

7. Objet moulé, fabriqué à partir d'un mélange de polymères selon au moins l'une des revendications 1 à 6.

8. Utilisation d'objets moulés selon la revendication 7 pour des applications en extérieur.

9. Procédé de fabrication des mélanges de polymères selon au moins l'une des revendications 1 à 6, dans lequel on mélange les composants polymères A1 et A2 et/ou A3 et éventuellement des adjuvants et/ou additifs supplémentaires.
